# EUROPÄISCHE PATENTANMELDUNG

(11) **EP 2 502 872 A1**
(43) Veröffentlichungstag der Anmeldung: **26.09.2012**
(21) Anmeldenummer: 12000807.3
(22) Anmeldetag: 08.02.2012
(51) Int. Cl.: B66F 9/07

(54) **Regalbediengeraät**

(30) Priorität: 24.03.2011 DE 102011015054
(71) Anmelder: GaUp GmbH, 33829 Borgholzhausen (DE)
(72) Erfinder: Upmeyer, Matthias, 33829 Borgholzhausen (DE); Gartemann, Andreas, 49479 Ibbenbüren (DE)
(74) Vertreter: Wagner, Carsten

(57) **Zusammenfassung**

Ein erfindungsgemäßes Regalbediengerät 2 zur Ein-und Auslagerung von Lasten an bzw. von Lagerplätzen eines Regallagers, insbesondere eines Hochregallagers, weist einen verfahrbaren Grundkörper 4 mit einer Tragstruktur 6 auf, an der ein vertikal verfahrbares Lastaufnahmemittel 8 angeordnet ist. Das Regalbediengerät 2 weist ferner eine an dem Grundkörper 4 angeordnete Personenplattform 16 auf. Erfindungsgemäß ist die Personenplattform 16 unabhängig von dem Lastaufnahmemittel 8 vertikal verfahrbar.

## Beschreibung

Die Erfindung betrifft ein Regalbediengerät der im Oberbegriff des Anspruchs 1 genannten Art zur Ein- und Auslagerung von Lasten an bzw. von Lagerplätzen eines Regallagers, insbesondere eines Hochregallagers.

Derartige Regalbediengeräte sind allgemein bekannt und werden für vielfältige Lageraufgaben eingesetzt. Sie weisen einen beispielsweise über am Boden angeordnete Schienen verfahrbaren Grundkörper auf, der eine Tragstruktur aufweist, an dem ein vertikal verfahrbares Lastaufnahmemittel angeordnet ist. Das Lastaufnahmemittel kann beispielsweise eine Gabelanordnung oder ein Kanalfahrzeug aufweisen. Um beispielsweise eine Beobachtung von Ein- und Auslagerungsvorgängen durch eine Bedienperson zu ermöglichen, beispielsweise im Rahmen von Funktionsüberprüfungen oder Instandhaltungsarbeiten, weisen die bekannten Regalbediengeräte eine Personenplattform auf, die auch als "Mitfahrkabine" bezeichnet wird. Bei den bekannten Regalbediengeräten ist die Personenplattform mit dem Lastaufnahmemittel verbunden, so daß es dessen Vertikalbewegungen nachvollzieht.

Der Erfindung liegt die Aufgabe zugrunde, ein Regalbediengerät der im Oberbegriff des Anspruchs 1 genannten Art anzugeben, dessen Funktionalität erweitert ist.

Diese Aufgabe wird durch die im Anspruch 1 angegebene Erfindung gelöst.

Der Grundgedanke der Erfindung besteht darin, Vertikalbewegungen der Personenplattform von den Vertikalbewegungen des Lastaufnahmemittels zu entkoppeln. Erfindungsgemäß ist somit die Personenplattform unabhängig von dem Lastaufnahmemittel vertikal verfahrbar. Hieraus ergeben sich in der Praxis wesentliche Vorteile. Kommt es bei den bekannten Regalbediengeräten beispielsweise bei einem Ein- oder Auslagerungsvorgang an einem Lagerplatz eines Hochregallagers zu einer Störung, aufgrund derer das Lastaufnahmemittel nicht mehr vertikal beweglich ist, beispielsweise aufgrund einer Verkantung einer einzulagernden Palette, so besteht die Anforderung, an der jeweiligen vertikalen Position des Lastaufnahmemittels Arbeiten durchzuführen, um die Störung zu beseitigen. Da die Personenplattform bei den bekannten Regalbediengeräten an die Vertikalbewegung des Lastaufnahmemittels gekoppelt ist, steht die Personenplattform hierfür nicht zur Verfügung, so daß das Bedienpersonal über Leitern in die Höhe des Lastaufnahmemittels klettern muß. Dies ist nicht nur zeitaufwendig und mühsam, sondern auch gefährlich, weil Hochregallager beispielsweise eine Höhe von 30 Metern aufweisen können. Nach einer Diagnose der aufgetretenen Störung ist es u. U. erforderlich, daß das Bedienpersonal mehrfach die Leitern hinaufklettert, wenn beispielsweise Werkzeug zum Beheben einer Störung benötigt wird. Dies erhöht die Mühe und den Zeitaufwand sowie das Gefahrenpotential.

Ein besonderer Vorteil der Erfindung besteht darin, daß zur Diagnose von Störungen die Personenplattform verwendet werden kann, da diese unabhängig von dem Lastaufnahmemittel vertikal verfahrbar ist und somit auch dann zur Verfügung steht, wenn das Lastaufnahmemittel in einer vertikalen Position blockiert ist. Zur Diagnose und ggf. Behebung einer Störung betritt bei einem efindungsgemäßen Regalbediengerät eine Bedienperson die Personenplattform auf Bodenniveau und verfährt die Personenplattform dann in den Vertikalbereich, in dem sich das Lastaufnahmemittel befindet. Die Bedienperson kann sich dann auf der Höhe des Lastaufnahmemittels ein Bild davon machen, welche Art von Störung vorliegt und welche Arbeiten zu ihrer Behebung erforderlich sein werden. Aufgrund der unabhängigen vertikalen Verfahrbarkeit der Personenplattform kann die Bedienperson das Lastaufnahmemittel aus verschiedenen Höhen betrachten, was die Diagnose von Störungen erleichtert.

Wenn das Regalbediengerät beispielsweise und insbesondere so ausgestaltet ist, daß das Lastaufnahmemittel von der Personenplattform aus bedient werden kann, beispielsweise über eine mobile Bedieneinheit, so kann die Bedienperson u. U. Störungen beheben, ohne die Personenplattform zu verlassen. Beispielsweise kann die Bedienperson durch manuell gesteuerte Verfahrbewegungen des Lastaufnahmemittels sowohl in Vertikalrichtung als auch in Ein- bzw. Auslagerungsrichtung Störungen beheben. Aufgrund der Erfindung ist somit die Diagnose und Behebung von Störungen zeitsparender und weitaus weniger mühsam gestaltet. Außerdem ist die Gefährdung von Bedienpersonen wesentlich verringert, da zum einen die Bedienperson einen vertikalen Weg zu dem Lastaufnahmittel nicht kletternd über eine Leiter, sondern mittels der Personenplattform zurücklegt und sich zum anderen Störungen u. U. von der Personenplattform aus beheben lassen, ohne daß die Bedienperson in das Regal hineinklettert.

Die Erfindung erweitert damit die Funktionalität von Regalbediengeräten in erheblichem Maße.

Grundsätzlich kann die Personenplattform an einer eigenen Tragstruktur angeordnet sein. Um den Aufbau des Regalbediengerätes einfach zu halten, sieht eine vorteilhafte Weiterbildung vor, daß die Personenplattform an der Tragstruktur des Grundkörpers angeordnet ist.

Die Tragstruktur des Grundkörpers des erfindungsgemäßen Regalbediengerätes kann entsprechend den jeweiligen Anforderungen in beliebiger geeigneter Weise ausgestaltet sein. Eine vorteilhafte Weiterbildung sieht insoweit vor, daß die Tragstruktur wenigstens eine Säule aufweist, an der die Personenplattform angeordnet ist.

Gemäß einer anderen vorteilhaften Weiterbildung weist die Tragstruktur wenigstens zwei zueinander beabstandete Säulen auf, die an ihrem oberen Ende durch eine Quertraverse miteinander verbunden sind. Bei einem derartigen Aufbau kann das Lastaufnahmemittel zwischen den Säulen in Vertikalrichtung verfahrbar aufgenommen sein, während die Personenplattform an einer dem Lastaufnahmemittel abgewandten Fläche einer der Säulen vertikal verfahrbar angeordnet sein kann.

Um die Sicherheit für das Bedienpersonal zu erhöhen, sieht eine andere vorteilhafte Weiterbildung der Erfindung vor, daß die Personenplattform mit einem Käfig oder einer Kabine versehen ist. Ein entsprechender Käfig kann beispielsweise als nach oben offener Teilkäfig ausgebildet sein. Ein besonders hohes Maß an Sicherheit ergibt sich dann, wenn die Personenplattform mit einer Kabine versehen ist, die die Bedienperson vollständig oder wenigstens teilweise umgibt.

Ein Verfahrantrieb zum vertikalen Verfahren der Personenplattform kann in beliebiger geeigneter Weise ausgebildet sein. Eine vorteilhafte Weiterbildung der Erfindung sieht insoweit vor, daß der Personenplattform ein elektromotorischer Verfahrantrieb zugeordnet ist.

Eine andere vorteilhafte Weiterbildung der Erfindung sieht vor, daß der Personenplattform eine Steuerungseinrichtung zur Ansteuerung der Personenplattform unabhängig von dem Lastaufnahmemittel zugeordnet ist. Bei dieser Ausführungsform kann die der Personenplattform zugeordnete Steuerungseinrichtung durch separate Hardware gebildet sein, die beispielsweise in einem Schaltschrank an dem Grundkörper des Lastaufnahmemittels angeordnet sein kann. Die Steuerungseinrichtung kann jedoch auch Teil einer das gesamte Regalbediengerät ansteuernden Steuerungseinrichtung sein.

Um die Funktionalität des erfindungsgemäßen Regalbediengerätes noch zu erweitern, sieht eine außerordentlich vorteilhafte Weiterbildung der Erfindung eine mobile Bedieneinheit vor, die über wenigstens eine Schnittstelle mit einer Lastaufnahmemittel-Steuerungseinrichtung verbindbar oder verbunden ist, derart, daß das Lastaufnahmemittel über die mobile Bedieneinheit von der Personenplattform aus bedienbar ist. Mittels einer solchen mobilen Bedieneinheit, die auch als "Mobile Panel" bezeichnet wird, kann Bedienpersonal insbesondere das Lastaufnahmemittel manuell ansteuern, um auf diese Weise Störungen zu beheben.

Eine andere vorteilhafte Weiterbildung der Erfindung sieht vor, daß die Personenplattform in Vertikalrichtung stufenlos oder annähernd stufenlos verfahrbar ist. Auf diese Weise kann die Personenplattform zur Diagnose bzw. Behebung von Störungen in Vertikalrichtung an jeder beliebigen Stelle plaziert werden, damit das Bedienpersonal beispielsweise den Ort der Störung aus unterschiedlichen Höhen betrachten kann. Unter einer stufenlosen oder annähernd stufenlosen Verfahrbarkeit wird erfindungsgemäß auch eine quasi-stufenlose Verfahrbarkeit verstanden, die sich beispielsweise dann ergibt, wenn die Personenplattform mittels eines Zahnstangentriebes vertikal verfahren wird.

Die Erfindung kann bei der Auslegung von Regalbediengeräten integriert werden. Es ist erfindungsgemäß jedoch auch möglich, vorhandene Regalbediengeräte mit einer Personenplattform auszustatten, die erfindungsgemäß unabhängig von dem Lastaufnahmemittel vertikal verfahrbar ist. Ein entsprechender Nachrüstsatz zur Nachrüstung eines Regalbediengerätes mit einer unabhängig von einem Lastaufnahmemittel des Regalbediengerätes vertikal verfahrbaren Personenplattform ist im Anspruch 10 angegeben. Bei einem solchen Nachrüstsatz kann die Personenplattform und ihre Anordnung an dem Regalbediengerät so ausgestaltet sein, wie dies in den das Regalbediengerät betreffenden Unteransprüchen 2 bis 9 angegeben ist.

Eine erfindungsgemäße Lageranordnung, die insbesondere nach Art eines Hochregallagers ausgebildet ist und wenigstens ein Regalbediengerät nach einem der Ansprüche 1 bis 9 aufweist, ist im Anspruch 11 angegeben.

Die Erfindung wird nachfolgend anhand der beigefügten Zeichnung, in der schematisiert ein Ausführungsbeispiel eines erfindungsgemäßen Regalbediengerätes dargestellt ist, näher erläutert. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: eine schematische Prinzipdarstellung eines erfindungsgemäßen Regalbediengerätes, wobei sich die Personenplattform in einer ersten vertikalen Position befindet,
- Fig. 2: in gleicher Darstellung wie Fig. 1 das Regalbediengerät gemäß Fig. 1, wobei sich die Personenplattform in einer zweiten vertikalen Position befindet und
- Fig. 3: in gleicher Darstellung wie Fig. 1 das Regalbediengerät gemäß Fig. 1, wobei sich die Personenplattform in einer dritten vertikalen Position befindet.

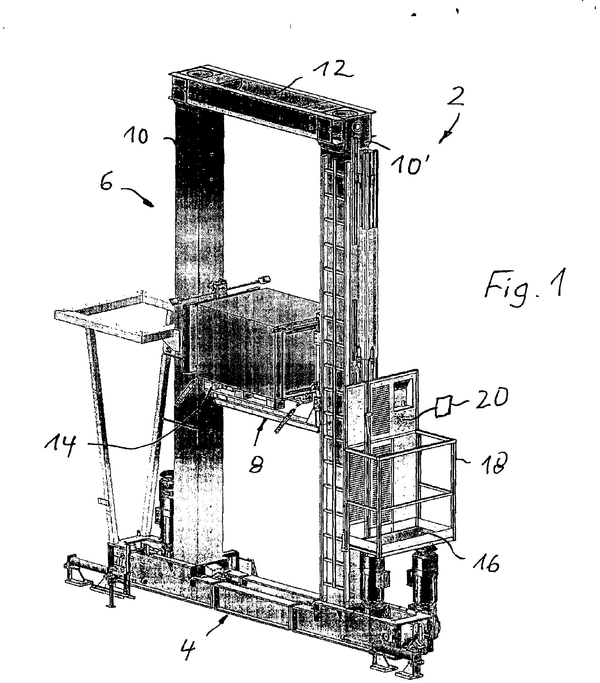

In Fig. 1 ist ein Ausführungsbeispiel eines erfindungsgemäßen Regalbediengerätes 2 zur Ein- und Auslagerung von Lasten an bzw. von Lagerplätzen eines Regallagers, insbesondere eines Hochregallagers dargestellt. Das Regalbediengerät 2 weist einen beispielsweise entlang von Schienen verfahrbaren Grundkörper 4 auf, der eine Tragstruktur 6 aufweist, an dem ein vertikal verfahrbares Lastaufnahmemittel 8 angeordnet ist. Die Tragstuktur 6 weist bei dem dargestellten Ausführungsbeispiel 2 zueinander beabstandete Säulen 10, 10' auf, die an ihrem oberen Ende durch eine Quertraverse 12 miteinander verbunden sind. Zwischen den Säulen 10, 10' ist das Lastaufnahmemittel 8 vertikal verfahrbar angeordnet. Das Lastaufnahmemittel 8 kann zur Durchführung von Ein- und Auslagerungsvorgängen beispielsweise eine Gabelanordnung oder ein Kanalfahrzeug aufweisen. In Fig. 1 ist beispielshalber als ein- bzw. auszulagernde Last eine beladene Palette 14 auf dem Lastaufnahmemittel 8 angeordnet.

Im übrigen sind der Aufbau und die Funktionsweise eines entsprechenden Regalbediengerätes 2 nebst Lastaufnahmemittel 8 dem Fachmann allgemein bekannt und werden daher hier nicht näher erläutert.

Das Regalbediengerät 2 weist ferner eine Personenplattform 16 auf, die erfindunsgemäß unabhängig von dem Lastaufnahmemittel 8 vertikal verfahrbar ist. Hierzu ist der Personenplattform 16 ein vertikaler Verfahranrtrieb zugeordnet, der als elektromotorischer Zahnstangentrieb ausgebildet ist, dessen Zahnstange an der dem Lastaufnahmemittel 8 abgewandten Fläche der Säule 10' montiert ist. Um die Personenplattform 16 unabhängig von dem Lastaufnahmemittel 8 anzusteuern, ist der Personenplattform 16 eine Steuerungseinrichtung zugeordnet.

Bei dem dargestellten Ausführungsbeispiel ist die Personenplattform 16 mit einem Käfig 18 versehen, der bei dem dargestellten Ausführungsbeispiel als nach oben offener Teilkäfig ausgebildet ist. Anstelle des Käfigs 18 kann die Personenplattform jedoch auch mit einer geschlossenen oder zumindest teilweise geschlossenen Kabine versehen sein.

Die vertikale Verfahrbewegung der Personenplattform 16 wird bei dem dargestellten Ausführungsbeispiel über eine an der Personenplattform 16 angeordnete Steuerungseinrichtung gesteuert, die bei dem dargestellten Ausführungsbeispiel nach Art einer zweihandbetätigten Totmann-Steuerung ausgebildet ist. Erfindungsgemäß können jedoch auch anders ausgestaltete Steuerungseinrichtungen verwendet werden.

Bei dem dargestellten Ausführungsbeispiel ist ferner eine mobile Bedieneinheit vorgesehen, die in der Zeichnung stark schematisiert bei dem Bezugszeichen 20 dargestellt ist. Die mobile Bedieneinheit 20 ist über eine Schnittstelle mit einer Lastaufnahmemittel-Steuerungseinrichtung verbunden, derart, daß das Lastaufnahmemittel 8 über die mobile Bedieneinheit 20 von der Personenplattform 16 aus bedienbar ist. Die Bedieneinheit 20 kann mit der Lastaufnahmemittel-Steuerungseinrichtung drahtgebunden, beispielsweise über Steuerungsleitungen, oder drahtlos kommunizieren. Bei der Schnittstelle kann es sich um eine lösbare Steckverbindung handeln. Auf diese Weise können beliebige geeignete Bedieneinheiten mit der Lastaufnahmemittel-Steuerungseinrichtung steckverbunden werden, insbesondere im Breich der Personenplattform 16. Es ist erfindungsgemäß jedoch auch möglich, daß die Bedieneinheit 20 an der Personenplattform 16 fest installiert ist. Über die Bedieneinheit 20 kann Bedienpersonal das Lastaufnahmemittel 8 manuell ansteuern.

Die Dimensionen des Regalbediengerätes 12, insbesondere die Höhe der Säulen 10, 10', sind in der Zeichnung rein schematisch dargestellt. In der Praxis können die Säulen 10, 10' beispielsweise eine Höhe von etwa 30 Metern haben, um Regalplätze in Hochregallagern zu bedienen. Insbesondere bei einer großen Höhe der Masten 10, 10' kann die Tragstruktur weitere Versteifungselemente aufweisen, beispielsweise nach Art einer Fachwerkstruktur.

Die Funktionsweise des erfindungsgemäßen Regalbediengerätes 2 ist wie folgt.

Die Figuren 1 bis 3 stellen das Lastaufnahmemittel jeweils in einer vertikalen Position dar, in der es sich zwischen dem Boden und der Traverse 12 befindet.

Erfindungsgemäß ist die Personenplattform 16 unabhängig von dem Lastaufnahmemittel vertikal verfahrbar, wie dies aus einem Vergleich der Figuren 1 bis 3 dargestellt ist. Die Figuren 1 bis 3 stellen das Lastaufnahmemittel 8 jeweils ind er gleichen Vertikalposition dar, während sich die Personenplattform 16 in unterschiedlichen vertikalen Positionen befindet.

Tritt bei Betrieb des Lastaufnahmemittels 8 eine Störung auf, aufgrund derer sich das Lastaufnahmemittel 8 beispielsweise nicht mehr vertikal verfahren läßt, so kann Bedienpersonal auf Bodenniveau die Personenplattform 16 betreten und dieselbe in eine vertikale Position verfahren, in der die Störung diagnostiziert und ggf. behoben werden kann.

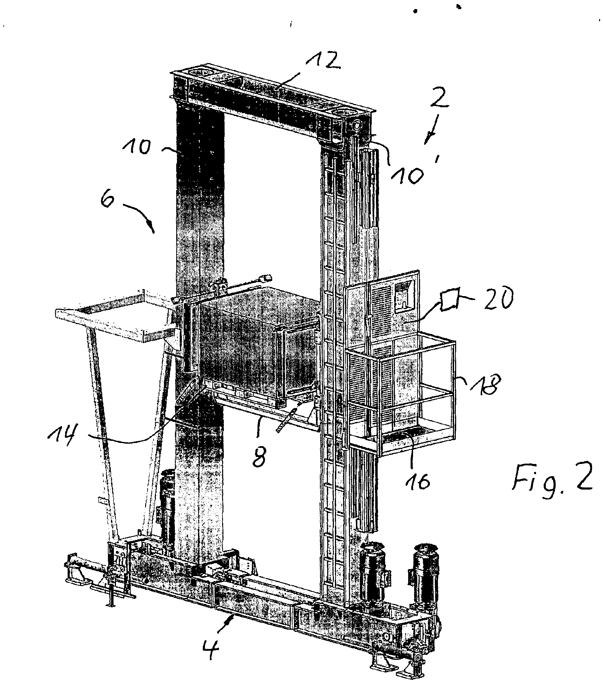

Fig. 2 zeigt die Personenplattform 16 in einer vertikalen Position, in der sie sich auf Höhe des Lastaufnahmemittels 8 befindet.

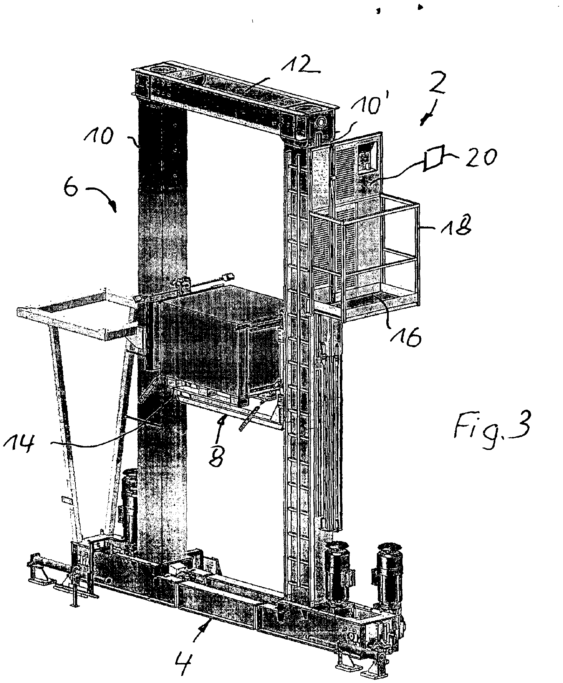

Fig. 3 zeigt demgegenüber die Personenplattform 16 in einer vertikalen Position, in der sie sich oberhalb des Lastaufnahmemittels 8 befindet.

Nach Diagnose der Störung kann das Bedienpersonal dann das Lastaufnahmemittel 8 mittels der mobilen Bedieneinheit 20 manuell betätigen. Auf diese Weise läßt sich häufig die Ursache von Störungen beseitigen, so daß es dann nicht mehr erforderlich ist, daß das Bedienpersonal in das Regal hineinklettert.

Das erfindungsgemäße Regalbediengerät 2 ist damit hinsichtlich seiner Funktionalität, insbesondere bei der Diagnose und Behebung von Störungen, erweitert. Dadurch, daß es grundsätzlich nicht mehr erforderlich ist, daß Bedienpersonal im Falle einer Störung mittels einer Leiter auf Höhe der jeweiligen Position des Lastaufnahmemittels 8 klettert, ist die Gefährdung des Bedienpersonals wesentlich verringert. Auerdem können Störungen wesentlich einfacher und zeitsparender behoben weden.

## Patentansprüche

1. Regalbediengerät zur Ein- und Auslagerung von Lasten an bzw. von Lagerplätzen eines Regallagers, insbesondere eines Hochregallagers,
mit einem verfahrbaren Grundkörper, der eine Tragstruktur aufweist, an der ein vertikal verfahrbares Lastaufnahmemittel angeordnet ist, und
mit einer an dem Grundkörper angeordneten Personenplattform,
**dadurch gekennzeichnet,**
**daß** die Personenplattform (16) unabhängig von dem Lastaufnahmemittel (8) vertikal verfahrbar ist.

2. Regalbediengerät nach Anspruch 1, **dadurch gekennzeichnet, daß** die Personenplattform (16) an der Tragstruktur (6) des Grundkörpers (4) angeordnet ist.

3. Regalbediengerät nach Anspruch 1 oder 2, **dadurch gekennzeichnet, daß** die Tragstruktur (6) wenigstens eine Säule (10, 10') aufweist, an der die Personenplattform (16) angeordnet ist.

4. Regalbediengerät nach einem der vorhergehenden Ansprüche, **dadurch gekennzeichnet, daß** die Tragstruktur (6) wenigstens zwei zueinander beabstandete Säulen (10, 10') aufweist, die an ihrem oberen Ende durch eine Quertraverse (12) miteinander verbunden sind.

5. Regalbediengerät nach einem der vorhergehenden Ansprüche, **dadurch gekennzeichnet, daß** die Personenplattform (16) mit einem Käfig (18) oder einer Kabine versehen ist.

6. Regalbediengerät nach einem der vorhergehenden Ansprüche, **dadurch gekennzeichnet, daß** der Personenplattform (16) ein elektromotorischer Verfahrantrieb zugeordnet ist.

7. Regalbediengerät nach einem der vorhergehenden Ansprüche, **dadurch gekennzeichnet, daß** der Personenplattform (16) eine Steuerungseinrichtung zur Ansteuerung der Personenplattform (16) unabhängig von dem Lastaufnahmemittel (8) zugeordnet ist.

8. Regalbediengerät nach einem der vorhergehenden Ansprüche, **gekennzeichnet durch** eine mobile Bedieneinheit (20), die über wenigstens eine Schnittstelle mit einer Lastaufnahmemittel-Steuerungseinrichtung verbindbar oder verbunden ist, derart, daß das Lastaufnahmemittel (8) über die mobile Bedieneinheit (20) von der Personenplattform (16) aus bedienbar ist.

9. Regalbediengerät nach einem der vorhergehenden Ansprüche, **dadurch gekennzeichnet, daß** die Personenplattform (16) in Vertikalrichtung stufenlos oder annähernd stufenlos verfahrbar ist.

10. Nachrüstsatz zur Nachrüstung eines Regalbediengerätes (2) mit einer unabhängig von einem Lastaufnahmemittel (8) des Regalbediengerätes (2) vertikal verfahrbaren Personenplattform (16), insbesondere entsprechend einem der vorhergehenden Ansprüche, wobei der Nachrüstsatz wenigstens
- eine an einer Tragstruktur (6) des Regalbediengerätes (2) montierbare Personenplattform (16),
- einen Verfahrantrieb zum vertikalen Verfahren der Personenplattform (16) und
- eine Steuerungseinrichtung zur Ansteuerung des Verfahrantriebes zum vertikalen Verfahren der Personenplattform (16)
aufweist.

11. Lageranordnung, insbesondere nach Art eines Hochregallagers ausgebildete Lageranordnung,
**dadurch gekennzeichnet,**
**daß** sie wenigstens ein Regalbediengerät nach einem der Ansprüche 1 bis 9 aufweist.
